# EUROPEAN PATENT APPLICATION

(11) **EP 4 847 390 A1**
(43) Date of publication of application: **02.12.2026**
(21) Application number: 26182242.3
(22) Date of filing: 01.06.2026
(51) Int. Cl.: B64D 31/06, B64C 27/57, B64D 45/00, F02C 9/00, F02C 9/58, F02D 28/00, F02D 41/00, G05B 13/04, G05D 1/85, B64D 27/10

(54) **PROPELLER DEGRADED GOVERNING MODE**

(30) Priority: 30.05.2025 US 202519224427
(71) Applicant: Pratt & Whitney Canada Corp., Longueuil, Québec J4G 1A1 (CA)
(72) Inventor: BOLON-BRUHN, Charles, (01BE5) Longueuil, J4G 1A1 (CA); FIEDLER, Andrzej, (01BE5) Longueuil, J4G 1A1 (CA); ARMSTRONG, Daniel, (01BE5) Longueuil, J4G 1A1 (CA)
(74) Representative: Dehns

(57) **Abstract**

A method for a propeller degraded governing mode for propeller-based engines (150) includes detecting a fault in a speed sensor (402) or an angle sensor (406) of a propeller (302). Upon detecting the fault in the speed sensor (402), the method includes determining, using a phase shift torque sensor (308) coupled to the propeller (302), a propeller speed (404) using a gear ratio of a gearbox (304) coupled to the propeller (302). Upon detecting the fault in the angle sensor (406), the method includes supplying power to the propeller (302) at or above a predetermined power threshold.

## Description

### TECHNICAL FIELD

This invention relates generally to turbine engine controls and processes. More specifically, this invention relates to a propeller degraded governing mode for gas turbine engines.

### BACKGROUND

A propeller-based aircraft, such as an aircraft having a turboprop engine, relies on several sensors for operation. In particular, for a propeller-based aircraft to operate safely, the aircraft controller requires propeller speed and propeller blade angle measurements during flight. The propeller speed measurement is used to control the propeller angle to govern at a target speed. Additionally, the propeller speed measurement is to protect the propeller from overspeed, by feathering the propeller if it goes above a safe value. Similarly, the propeller angle measurement is used to control the propeller angle when governing at a low power level, such as near propeller disking. The propeller angle measurement is also used to protect the propeller from inadvertent reverse angling by feathering the propeller if it goes into a reverse angle condition. If a fault is detected with the sensors, the control system sets the engine to idle and feathers the propeller. This results in the aircraft entering a gliding or unpowered mode.

### SUMMARY

This invention provides a propeller degraded governing mode for propeller-based engines.

According to an aspect of the present invention, a method for a propeller degraded governing mode for propeller-based engines is provided. The method includes detecting a fault in a speed sensor or an angle sensor of a propeller. Upon detecting the fault in the speed sensor, the method includes determining, using a phase shift torque sensor coupled to the propeller, a propeller speed using a gear ratio of a gearbox coupled to the propeller. Upon detecting the fault in the angle sensor, the method includes supplying power to the propeller at or above a predetermined power threshold.

Optionally, and in accordance with the above, the predetermined power threshold may be calculated using a propeller map of the propeller based on one or more flight conditions.

Optionally, and in accordance with any of the above, supplying power to the propeller at the predetermined power threshold may include supplying a power level such that a propeller blade angle may be coarsened to maintain a target propeller speed.

Optionally, and in accordance with any of the above, determining, using the phase shift torque sensor coupled to the propeller, the propeller speed using the gear ratio of a gearbox coupled to the propeller may include applying the gear ratio to a shaft speed component of the phase shift torque sensor to determine the propeller speed.

Optionally, and in accordance with any of the above, the method may further include preventing overspeed of the propeller by feathering the propeller based on the shaft speed component of the phase shift torque sensor.

Optionally, and in accordance with any of the above, supplying power to the propeller at the predetermined power threshold may include supplying the power to multiple engines in a multiple engine aircraft at the same predetermined power threshold.

Optionally, and in accordance with any of the above, the method may further include, upon supplying power to the propeller at the predetermined power threshold, preventing a reverse angle condition of the propeller.

According to another aspect of the present invention, an electronic device is provided. The electronic device includes a propeller coupled to a speed sensor and an angle sensor, and at least one processor coupled to the propeller, the speed sensor, and the angle sensor. The at least one processor is configured to cause the electronic device to detect a fault in the speed sensor or the angle sensor of the propeller. Upon detecting the fault in the speed sensor, the at least one processor is configured to cause the electronic device to determine, using a phase shift torque sensor coupled to the propeller, a propeller speed using a gear ratio of a gearbox coupled to the propeller. Upon detecting the fault in the angle sensor, the at least one processor is configured to cause the electronic device to supply power to the propeller at or above a predetermined power threshold.

Optionally, and in accordance with the above, the at least one processor may be configured to cause the electronic device to calculate the predetermined power threshold using a propeller map of the propeller based on one or more flight conditions.

Optionally, and in accordance with any of the above, the at least one processor, when causing the electronic device to command power to the propeller at the predetermined power threshold, may be further configured to cause the electronic device to supply a power level such that a propeller blade angle may be coarsened to maintain a target propeller speed.

Optionally, and in accordance with any of the above, the at least one processor may be further configured to cause the electronic device to prevent overspeed of the propeller by feathering the propeller based on the shaft speed component of the phase shift torque sensor.

Optionally, and in accordance with any of the above, the at least one processor, when causing the electronic device to determine, using the phase shift torque sensor coupled to the propeller, the propeller speed using the gear ratio of a gearbox coupled to the propeller, may be further configured to cause the electronic device to apply the gear ratio to a shaft speed component of the phase shift torque sensor to determine the propeller speed.

Optionally, and in accordance with any of the above, the at least one processor, when causing the electronic device to supply power to the propeller at the predetermined power threshold, may be further configured to cause the electronic device to supply the power to multiple engines in a multiple engine aircraft at the same predetermined power threshold.

Optionally, and in accordance with any of the above, the at least one processor may be further configured to cause the electronic device to, upon commanding power to the propeller at the predetermined power threshold, prevent a reverse angle condition of the propeller.

According to another aspect of the present invention, a non-transitory computer-readable medium is provided. The non-transitory computer-readable medium includes program code, that when executed by at least one processor of an electronic device, causes the electronic device to detect a fault in a speed sensor or an angle sensor of a propeller. Upon detecting the fault in the speed sensor, the non-transitory computer-readable medium includes program code, that when executed by at least one processor of an electronic device, causes the electronic device to determine, using a phase shift torque sensor coupled to the propeller, a propeller speed using a gear ratio of a gearbox coupled to the propeller. Upon detecting the fault in the angle sensor, the non-transitory computer-readable medium includes program code, that when executed by at least one processor of an electronic device, causes the electronic device to supply power to the propeller at or above a predetermined power threshold.

Optionally, and in accordance with the above, the program code may further include program code, that when executed by the at least one processor, causes the electronic device to calculate the predetermined power threshold using a propeller map of the propeller based on one or more flight conditions.

Optionally, and in accordance with any of the above, the program code, that when executed by the at least one processor, causes the electronic device to supply power to the propeller at the predetermined power threshold, may further include program code, that when executed by the at least one processor, causes the electronic device to supply a power level such that a propeller blade angle may be coarsened to maintain a target propeller speed.

Optionally, and in accordance with any of the above, the program code may further include program code, that when executed by the at least one processor, causes the electronic device to prevent overspeed of the propeller by feathering the propeller based on the shaft speed component of the phase shift torque sensor.

Optionally, and in accordance with any of the above, the program code, that when executed by the at least one processor, causes the electronic device to determine, using the phase shift torque sensor coupled to the propeller, the propeller speed using the gear ratio of a gearbox coupled to the propeller, may further include program code, that when executed by the at least one processor, causes the electronic device to apply the gear ratio to a shaft speed component of the phase shift torque sensor to determine the propeller speed.

Optionally, and in accordance with any of the above, the program code may further include program code, that when executed by the at least one processor, causes the electronic device to, upon supplying power to the propeller at the predetermined power threshold, prevent a reverse angle condition of the propeller.

Other technical features may be readily apparent to one skilled in the art from the following figures, descriptions, and claims.

### BRIEF DESCRIPTION OF THE DRAWINGS

For a more complete understanding of this invention, reference is made to the following description, taken in conjunction with the accompanying drawings, in which:
Figure 1 illustrates an example aircraft with gas turbine engines in accordance with this invention;
Figure 2 illustrates an example gas turbine engine in a turboprop configuration in accordance with this invention;
Figure 3 illustrates an example engine architecture in accordance with this invention;
Figure 4 illustrates a flow chart of an example propeller degraded governing mode algorithm in accordance with this invention;
Figure 5 illustrates an example method for operating a turbine engine in a propeller degraded governing mode according to this invention; and
Figure 6 illustrates an example device for a propeller degraded governing mode for a gas turbine engine in accordance with this invention.

### DETAILED DESCRIPTION

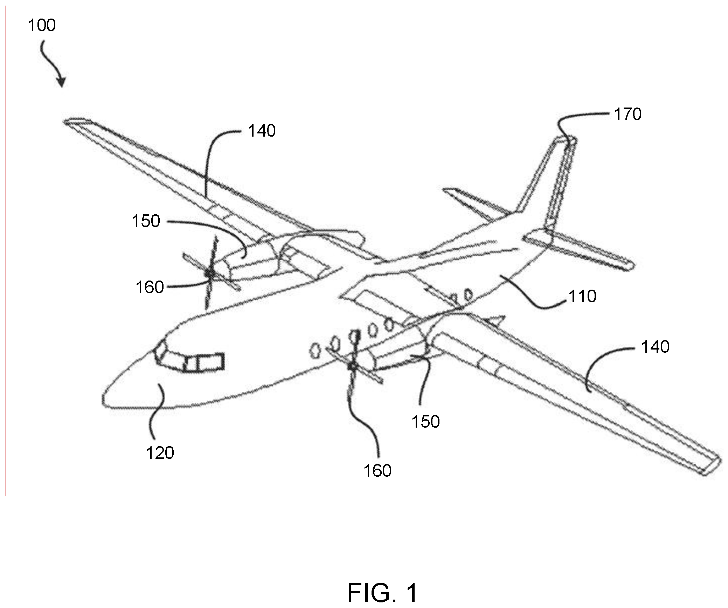

Figures 1 through 6, described below, and the various embodiments used to describe the principles of the present invention are by way of illustration only and should not be construed in any way to limit the scope of this invention. Those skilled in the art will understand that the principles of the present invention may be implemented in any type of suitably arranged device or system.

As described above, a propeller-based aircraft, such as an aircraft having a turboprop engine, relies on several sensors for operation. In particular, for a propeller-based aircraft to operate safely, the aircraft controller requires propeller speed and propeller blade angle measurements during flight.

The propeller speed measurement is used to control the propeller angle to govern at a target speed. Additionally, the propeller speed measurement is to protect the propeller from overspeed, by feathering the propeller if it goes above a safe value. Similarly, the propeller angle measurement is used to control the propeller angle when governing at a low power level, such as near propeller disking. The propeller angle measurement is also used to protect the propeller from inadvertent reverse angling by feathering the propeller if it goes into a reverse angle condition.

If either the speed or angle sensor has failed, the control system cannot manage or protect the propeller. Turboprop engines have systems in place in case of any fault in the system is detected. If a fault is detected with the sensors, the current process includes setting the engine to idle and feathering the propeller. This results in the aircraft entering a gliding or unpowered mode.

The present invention provides systems and methods for a propeller degraded governing mode that, when a fault is detected, allows for the engine to remain powered as the aircraft returns to the airport. In particular, the present invention provides methods and systems that use the phase shift torque sensor to calculate the propeller speed using a gear ratio of a gearbox coupled between the propeller and the engine to prevent overspeed and manage the propeller blade angle to allow a powered return (e.g., to an airport) upon failure of a speed sensor, a blade angle sensor, or both. The systems and methods of the present invention are applicable to any engine with an electronic engine control and electronic propellor control and equipped with a phase shift torque sensor or equivalent sensor capable of measuring shaft speed. The phase shift torque sensor location would change based on the engine type.

Figure 1 illustrates an example aircraft 100 with gas turbine engines in accordance with this invention. The embodiment of the aircraft 100 illustrated in Figure 1 is for illustration only, and other aircrafts could have the same or similar configuration. However, aircrafts come in a wide variety of configurations, and Figure 1 does not limit the scope of this invention to any particular implementation of a propeller-based aircraft.

As shown in Figure 1, the aircraft 100 includes a fuselage 110, a pair of wings 140 (or more), engines 150, propellers 160, and a tail 170. The aircraft 100 may be any suitable aircraft (e.g., corporate, private, commercial) which includes multiple engines 150 and propellers 160. Collectively, an engine-propeller pair may be referred to as a "powerplant." The aircraft 100 may be a fixed wing or a rotary wing aircraft. The fuselage 110 has a cockpit 120, which may be positioned at any suitable location on the aircraft 100, for example at a front portion of the fuselage 110. The cockpit 120 is configured for accommodating one or more operators who control the aircraft 100 by way of one or more operator controls. The operator controls may include any suitable number of pedals, yokes, steering wheels, center sticks, flight sticks, levers, knobs, switches, and the like. Although two engines 150 are shown, the aircraft 100 may have any suitable number of engines, for example three, four, six, eight, or more.

The engines 150 effect rotational motion in the propellers 160, which in turn produce thrust via propeller blades, causing the aircraft 100 to be displaced. The propeller blades are configured for assuming a propeller blade angle, which varies the thrust produced by the propellers 160. The propeller blade angle is indicative of an orientation of the blades of the propellers 160 relative to a particular reference angle. For example, a positive propeller blade angle may cause the propellers 160 to produce forward thrust, such as a thrust which displaces the aircraft 100 in a direction aligned with the heading of the aircraft 100. Conversely, a negative propeller blade angle may cause the propellers 160 to produce reverse thrust, which is substantially opposite positive thrust.

In certain circumstances, for example during cruise portions of a flight mission, it may be desired to engage automatic control of part or all of the operation of powerplants of the aircraft 100, including of the engines 150 or the propellers 160. Automatic control of the engines 150 (e.g., autothrottle) involves at least automatic control of a level of fuel flow to the engines 150. The autothrottle may also involve control of other operating parameters of the engines 150, including air intake and bleed, orientation of variable geometry mechanisms, and the like. In embodiments in which the aircraft 100 includes the propellers 160, the autothrottle may additionally control a rotational speed of the propellers 160.

Although Figure 1 illustrates an example aircraft 100 with gas turbine engines, various changes may be made to Figure 1. For example, various components in Figure 1 may be combined, further subdivided, replicated, omitted, or rearranged and additional components may be added according to particular needs.

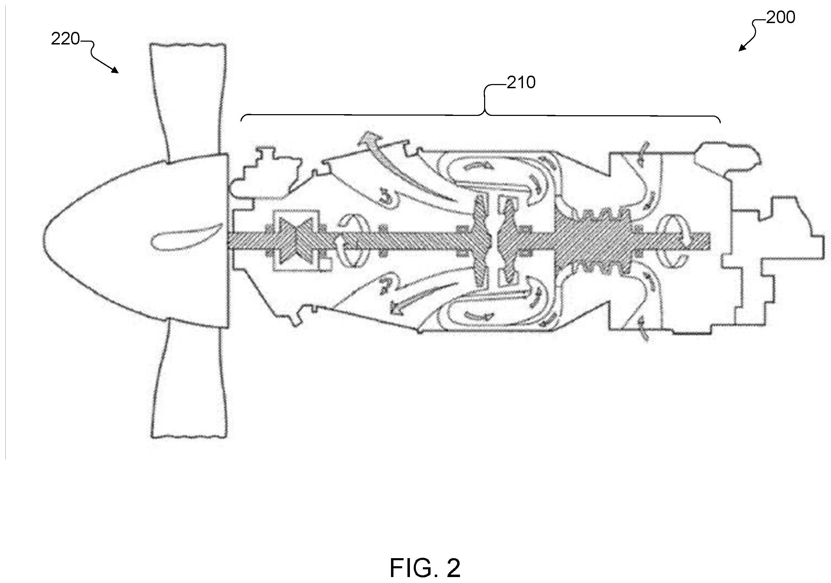

Figure 2 illustrates an example powerplant 200 in a turboprop configuration in accordance with this invention. The embodiment of the powerplant 200 illustrated in Figure 2 is for illustration only, and other powerplants could have the same or similar configuration. However, powerplants come in a wide variety of configurations, and Figure 2 does not limit the scope of this invention to any particular implementation of a propeller-based powerplant.

As shown in Figure 2, the powerplant 200 is configured for a propeller-driven aircraft, and includes an engine 210 and a propeller 220. The propeller 220 converts rotary motion from a shaft of the engine 210 to provide propulsive force (thrust) for the aircraft. The thrust generated by the powerplant 200 includes the propeller thrust (FNP) and the engine jet thrust (FENJ). The propeller thrust is a function of many factors, such as ambient temperature, ambient pressure/altitude, airspeed, propeller rotational speed, and power input to the propeller by the engine, and the airfoil design of the propeller blades.

The powerplant 200 of Figure 2 is a turboprop engine, but it could also be any other type of engine including a propeller 220, such as a piston engine, a turboshaft engine, and the like. In regular operation, the engine 210 and the propeller 220 are regulated by a pilot or other operator by way of various control inputs.

Although Figure 2 illustrates an example powerplant 200, various changes may be made to Figure 2. For example, various components in Figure 2 may be combined, further subdivided, replicated, omitted, or rearranged and additional components may be added according to particular needs. Additionally, although propeller-based configurations and turbofan configurations are described, other engine configurations, including turbojet configurations, are contemplated as part of the present invention.

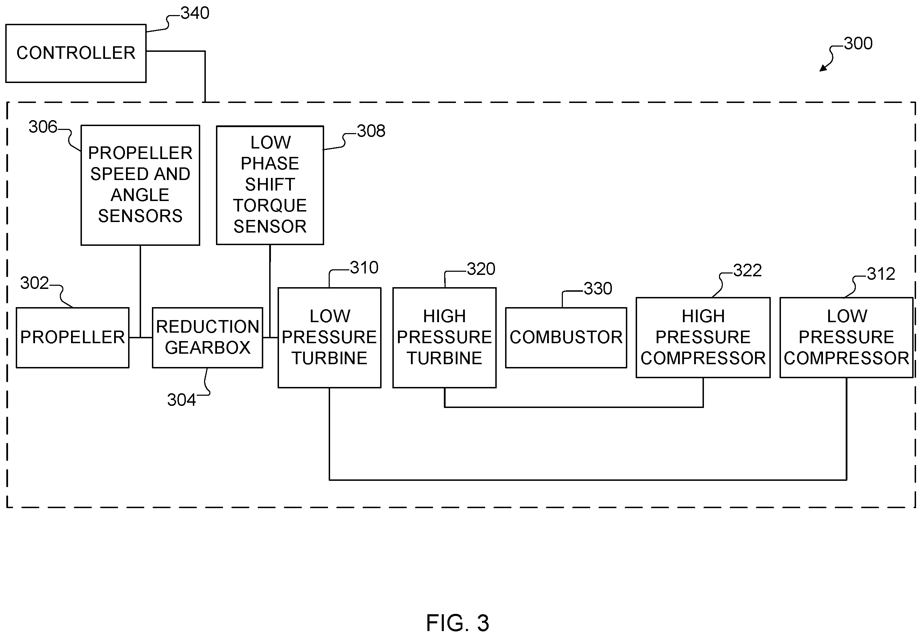

Figure 3 illustrates an example engine architecture 300 in accordance with this invention. The embodiment of the engine architecture 300 illustrated in Figure 3 is for illustration only, and other engine architectures could have the same or similar configuration. However, engine architectures come in a wide variety of configurations, and Figure 3 does not limit the scope of this invention to any particular implementation of a propeller-based engine architecture.

As shown in Figure 3, the engine architecture 300 includes a propeller 302 coupled to a gearbox 304 with speed and angle sensors 306 coupled between the propeller 302 and the gearbox 304. The engine architecture 300 includes a phase shift torque sensor 308 coupled between the gearbox 304 and a low-pressure turbine 310. The low-pressure turbine 310 is coupled to a low-pressure compressor 312. A high-pressure turbine 320 and a high-pressure compressor 322 are disposed between the low-pressure turbine 310 and the low-pressure compressor 312 where a combustor 330 is disposed between the high-pressure turbine 320 and the high-pressure compressor 322. The engine block (e.g., the propeller 302-combustor 330) is coupled to a controller 340.

During operation, air flows into the low-pressure compressor 312 and the high-pressure compressor 322 for compression where the low-pressure compressor 312 compresses the intake air to a first pressure and the high-pressure compressor 322 compresses the air flow from the first pressure to a second pressure. The pressurized air then flows into the combustor 330, where it is mixed with fuel at a fuel ratio and combusted. The high-pressure turbine 320 receives the combusted air or exhaust and extracts energy from the combusted air. The low-pressure turbine 310 then receives the remaining combusted air or exhaust to further extract energy. The extracted energy from the high-pressure turbine 320 and the low-pressure turbine 310 rotate a shaft connected to the gearbox 304. The phase shift torque sensor 308 is coupled to the shaft to measure both low-pressure turbine speed (NL) and torque (Q) before the gearbox 304. The gearbox 304 then drives the propeller 302 to rotate where the speed and angle sensors 306 are coupled. The speed and angle sensors 306 measure the rotational speed and the blade angle of the propeller 302, respectively.

The controller 340 may be a dual channel Engine and Propeller Electronic Control System (EPECS). The controller 340 is coupled to the speed and angle sensors 306 and the phase shift torque sensor 308. The speed and angle sensors 306 is used to govern the propeller to a desired speed, while the phase shift torque sensor 308 is used to detect when the propeller blade angle approaches a "fine pitch" that could result in a propeller overspeed risk or inadvertent reverse operation. It is noted that the propeller shaft and the low-pressure turbine shaft are physically connected by means of the gearbox 304, therefore either speed can be calculated using the phase shift torque sensor 308 and the gear ratio of the gearbox 304.

Although Figure 3 illustrates an example engine architecture 300, various changes may be made to Figure 3. For example, various components in Figure 3 may be combined, further subdivided, replicated, omitted, or rearranged and additional components may be added according to particular needs.

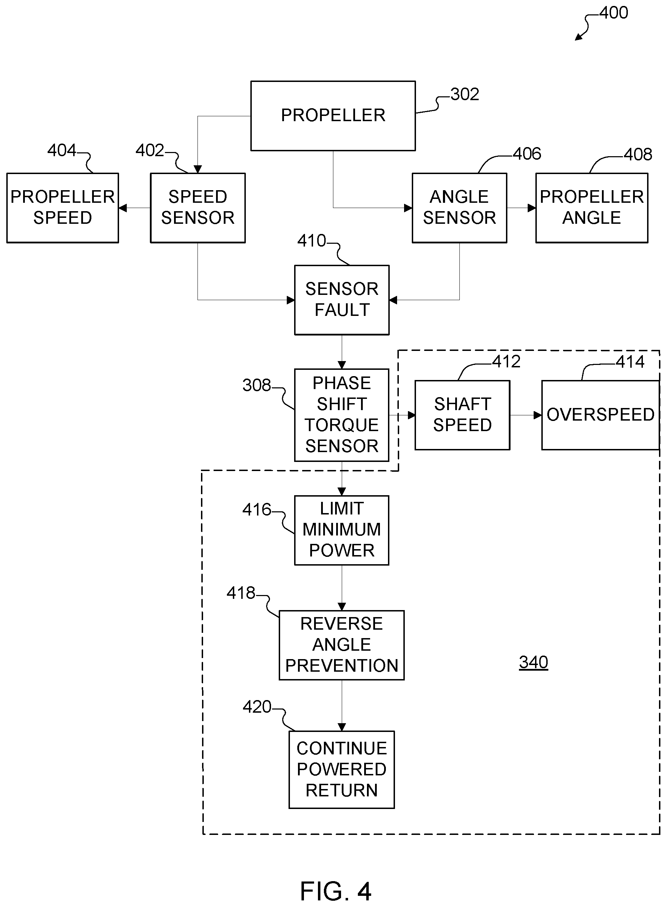

Figure 4 illustrates a flow chart of an example propeller degraded governing mode architecture 400 in accordance with this invention. For example, the propeller degraded governing mode architecture 400 may be used in the controller 340 of the engine architecture 300 of Figure 3.

As shown in Figure 4, the degraded governing mode architecture 400 includes a speed sensor 402 and an angle sensor 406 (e.g., the speed and angle sensors 306 of Figure 3) coupled to the propeller 302. The speed sensor 402 governs a propeller speed 404 of the propeller 302 and the angle sensor 406 governs a propeller blade angle 408 of the propeller 302. If failure occurs in either the speed sensor 402, the angle sensor 406, or both, a sensor fault 410 is detected, which changes the use of the phase shift torque sensor 308. For example, upon detecting a fault in the speed sensor 402, the shaft speed component 412 of the phase shift torque sensor 308 can be used to calculate propeller speed 404 using the gear ratio of the gearbox 304 using the controller 340. Although propeller blade angle 408 cannot be explicitly measured by the phase shift torque sensor 308, a minimum blade angle protection can be maintained by ensuring that the power supplied to the propeller by the engine is greater than a minimum threshold 416, which will coarsen the propeller blade angle to maintain the propeller target speed. A minimum power threshold is selected to ensure that the propeller blade angle is always coarser than the minimum allowable blade angle. This power level may be analytically determined from the propeller map.

As such, the failure of the speed sensor 402 and the angle sensor 406 can be accommodated. For example, the speed of the low-pressure turbine 310 can be used to control the propeller blade angle 408 to govern it at a target speed. The speed of the low-pressure turbine 310 is also used to protect the propeller from overspeed 414 and a reverse angle condition 418, by feathering if the speed of the low-pressure turbine 310 goes above a predetermined power threshold. The engine power request is kept above a minimum threshold 416 to ensure that governing on the minimum propeller blade angle is not required, thus eliminating the risk of overspeed 414 or inadvertent reverse operation 418 due to propeller operating at too low of an angle. The minimum power level may be calculated from the propeller map and based on the flight conditions, altitude, and airspeed, to increase accuracy of the power setting.

For twin or multi engine aircrafts, all engine power settings are limited to the same minimum limit so a proper thrust level can be maintained. By saturating power to a minimum level, any additional failure of the propeller control actuator causing the angle to move towards reverse will always trigger an overspeed 414 detection prior to reaching reverse, thus allowing for reverse angle prevention 418 and removing the need for explicit minimum propeller blade angle protection.

The degraded governing mode architecture 400 allows for the aircraft to remain powered, without needing to feather the propeller and glide back to the airport in a powered return 420. In a twin-engine application, the power setting of an unaffected engine would be adjusted in a manner that would complement the malfunctioning engine to maintain aircraft controllability.

Although Figure 4 illustrates a flow chart of an example propeller degraded governing mode architecture 400, various changes may be made to Figure 4. For example, various components in Figure 4 may be combined, further subdivided, replicated, omitted, or rearranged and additional components may be added according to particular needs.

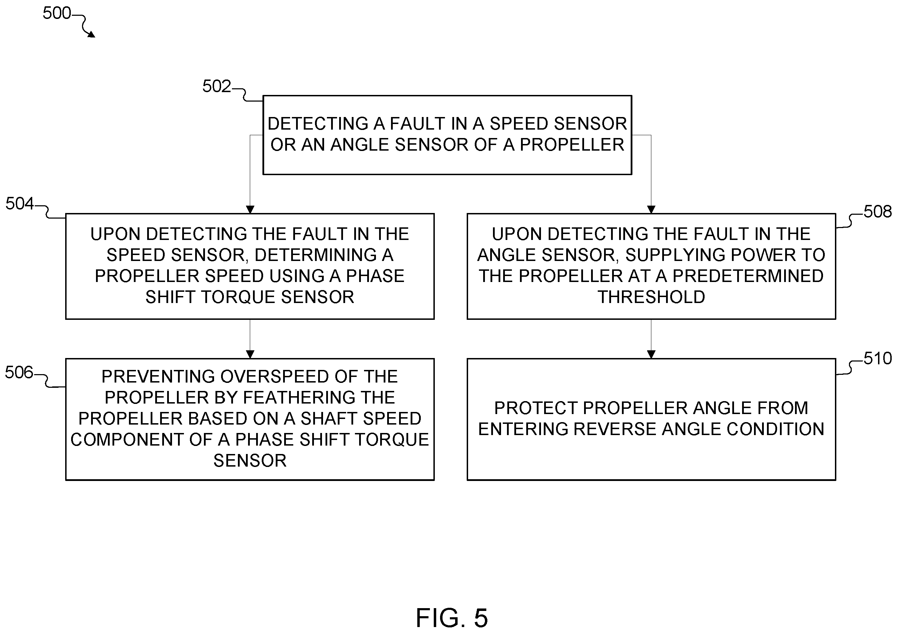

Figure 5 illustrates an example method 500 for operating a turbine engine in a propeller degraded governing mode according to this invention. For ease of explanation, the method 500 of Figure 5 is described as being performed using the engine architecture 300 of Figure 3. However, the method 500 may be used with any other suitable system and any other suitable turbine engine architecture.

As shown in Figure 5, a fault is detected in the speed sensor or the angle sensor of the propeller at step 502. For example, the speed sensor 402, the angle sensor 406, or both may generate variations in signal amplitude, frequency, or noise levels that indicate failure. Alternatively, or additionally, a fault detection algorithm running on the controller 340 may detect a fault in the speed sensor 402, the angle sensor 406, or both. Other fault detection methods, such as anomaly detection and self-diagnostic processes, are considered.

Upon detecting the fault in the speed sensor, a propeller speed is determined using a phase shift torque sensor coupled to the propeller and a gear ratio of a gearbox coupled to the propeller at step 504. For example, the phase shift torque sensor 308 may supply a shaft speed component to the controller 340 which then applies the gear ratio to the shaft speed component of the phase shift torque sensor 308 to determine the propeller speed 404.

Overspeed of the propeller is prevented by feathering the propeller based on the shaft speed component of the phase shift torque sensor at step 506. For example, the controller 340, upon detecting a fault in the speed sensor 402, may use the shaft speed component 412 of the phase shift torque sensor 308 to calculate propeller speed 404 using the gear ratio of the gearbox 304.

Upon detecting the fault in the angle sensor, power is supplied to the propeller at a predetermined power threshold at step 508. For example, the controller 340 may calculate the predetermined power threshold using a propeller map of the propeller 302 based on one or more flight conditions. The controller 340 may then supply a power level such that a propeller blade angle 408 is coarsened to maintain a target propeller speed. In multi-engine aircrafts, the controller 340 may supply the power to multiple engines at the same predetermined power threshold.

A propeller angle of the propeller is protected from entering a reverse angle condition by feathering the propeller based on the shaft speed component of the phase shift torque sensor at step 510. For example, the controller 340 may prevent a reverse angle condition from occurring by supplying power to the propeller at the predetermined power threshold. Additionally, the controller 340 may incorporate feathering if the speed of the low-pressure turbine 310 goes above the predetermined power threshold.

Although Figure 5 illustrates one example of a method 500 for operating a turbine engine in a propeller degraded governing mode, various changes may be made to Figure 5. For example, while shown as a series of steps, various steps in Figure 5 may overlap, occur in parallel, or occur any number of times.

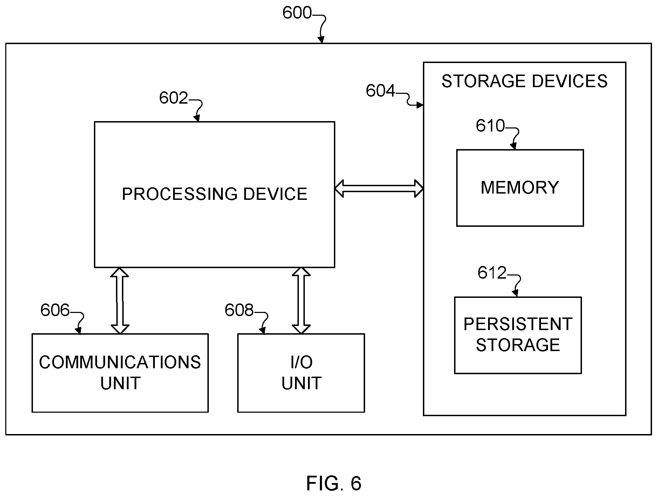

Figure 6 illustrates an example device 600 for a propeller degraded governing mode for a gas turbine engine according to this invention. One or more instances of the device 600 (or portions thereof) may, for example, be used to, at least partially, implement the functionality of the degraded governing mode architecture 400 of Figure 4. However, the functionality of the degraded governing mode architecture 400 may be implemented in any other suitable manner.

As shown in Figure 6, the device 600 denotes a computing device or system that includes at least one processing device 602, at least one storage device 604, at least one communications unit 606, and at least one input/output (I/O) unit 608. The processing device 602 may execute instructions that can be loaded into a memory 610. The processing device 602 includes any suitable number(s) and type(s) of processors or other devices in any suitable arrangement. Example types of processing devices 602 include one or more microprocessors, microcontrollers, DSPs, ASICs, GPUs, FPGAs, or discrete circuitry.

The memory 610 and a persistent storage 612 are examples of storage devices 604, which represent any structure(s) capable of storing and facilitating retrieval of information (such as data, program code, and/or other suitable information on a temporary or permanent basis). The memory 610 may represent a random-access memory or any other suitable volatile or non-volatile storage device(s). The persistent storage 612 may contain one or more components or devices supporting longer-term storage of data, such as a read only memory, hard drive, Flash memory, or optical disc.

The communications unit 606 supports communications with other systems or devices. For example, the communications unit 606 can include a network interface card or a wireless transceiver facilitating communications over a wired or wireless network. The communications unit 606 may support communications through any suitable physical or wireless communication link(s).

The I/O unit 608 allows for input and output of data. For example, the I/O unit 608 may provide a connection for user input through a keyboard, mouse, keypad, touchscreen, or other suitable input device. The I/O unit 608 may also send output to a display or other suitable output device. Note, however, that the I/O unit 608 may be omitted if the device 600 does not require local I/O, such as when the device 600 can be accessed remotely or operated autonomously.

In some embodiments, the instructions executed by the processing device 602 can include instructions that implement all or portions of the functionality of the degraded governing mode architecture 400 described above. For example, the instructions executed by the processing device 602 can include instructions for a propeller degraded governing mode for a gas turbine engine as described above.

Although Figure 6 illustrates one example of a device 600 for a propeller degraded governing mode for a gas turbine engine, various changes may be made to Figure 6. For example, computing devices and systems come in a wide variety of configurations, and Figure 6 does not limit this invention to any particular computing device or system.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present invention should not be read as implying that any particular element, step, or function is an essential or critical element that must be included in the claim scope. The scope of patented subject matter is defined only by the allowed claims.

While this invention has described certain embodiments and generally associated methods, alterations and permutations of these embodiments and methods will be apparent to those skilled in the art. Accordingly, the above description of example embodiments does not define or constrain this invention. Other changes, substitutions, and alterations are also possible without departing from the spirit and scope of this invention, as defined by the following claims.

## Claims

1. A method for operating an engine (210) in a propeller degraded governing mode, the method comprising:
detecting a fault in a speed sensor (402) or an angle sensor (406) of a propeller (302);
upon detecting the fault in the speed sensor (402), determining, using a phase shift torque sensor (308) coupled to the propeller (302), a propeller speed (404) using a gear ratio of a gearbox (304) coupled to the propeller (302); and
upon detecting the fault in the angle sensor (406), supplying power to the propeller (302) at or above a predetermined power threshold.

2. The method of claim 1, wherein the predetermined power threshold is calculated using a propeller map of the propeller (302) based on one or more flight conditions.

3. The method of claim 1 or 2, wherein supplying power to the propeller (302) at the predetermined power threshold comprises supplying a power level such that a propeller blade angle (408) is coarsened to maintain a target propeller speed (404).

4. The method of any preceding claim, wherein determining, using the phase shift torque sensor (308) coupled to the propeller (302), the propeller speed (404) using the gear ratio of the gearbox (304) coupled to the propeller (302) comprises applying the gear ratio to a shaft speed component (412) of the phase shift torque sensor (308) to determine the propeller speed (404).

5. The method of claim 4, further comprising:
preventing overspeed (414) of the propeller (302) by feathering the propeller (302) based on the shaft speed component (412) of the phase shift torque sensor (308).

6. The method of any preceding claim, wherein supplying power to the propeller (302) at the predetermined power threshold comprises supplying the power to multiple engines (150) in a multiple engine aircraft (100) at the same predetermined power threshold.

7. The method of any preceding claim, further comprising:
upon supplying power to the propeller (302) at the predetermined power threshold, preventing a reverse angle condition (418) of the propeller (302).

8. An electronic device (600) configured for operating an engine (210) in a propeller degraded governing mode, the electronic device (600) comprising:
a propeller (302) coupled to a speed sensor (402) and an angle sensor (406); and
at least one processor coupled to the propeller (302), the speed sensor (402), and the angle sensor (406), the at least one processor configured to cause the electronic device (600) to:
detect a fault in the speed sensor (402) or the angle sensor (406) of the propeller (302);
upon detecting the fault in the speed sensor (402), determine, using a phase shift torque sensor (308) coupled to the propeller (302), a propeller speed (404) using a gear ratio of a gearbox (304) coupled to the propeller (302); and
upon detecting the fault in the angle sensor (406), command power to the propeller (302) at or above a predetermined power threshold.

9. The electronic device (600) of claim 8, wherein the at least one processor is configured to cause the electronic device (600) to calculate the predetermined power threshold using a propeller (302) map of the propeller (302) based on one or more flight conditions.

10. The electronic device (600) of claim 8 or 9, wherein the at least one processor, when causing the electronic device (600) to command power to the propeller (302) at the predetermined power threshold, is further configured to cause the electronic device (600) to supply a power level such that a propeller blade angle (408) is coarsened to maintain a target propeller speed (404).

11. The electronic device (600) of claim 10, wherein the at least one processor is further configured to cause the electronic device (600) to:
prevent overspeed (414) of the propeller (302) by feathering the propeller (302) based on a shaft speed component (412) of the phase shift torque sensor (308).

12. The electronic device (600) of any of claims 8 to 11, wherein the at least one processor, when causing the electronic device (600) to determine, using the phase shift torque sensor (308) coupled to the propeller (302), the propeller speed (404) using the gear ratio of the gearbox (304) coupled to the propeller (302), is further configured to cause the electronic device (600) to apply the gear ratio to a shaft speed component (412) of the phase shift torque sensor (308) to determine the propeller speed (404).

13. The electronic device (600) of any of claims 8 to 12, wherein the at least one processor, when causing the electronic device (600) to command power to the propeller (302) at the predetermined power threshold, is further configured to cause the electronic device (600) to supply power to multiple engines (150) in a multiple engine (210) aircraft (100) at the same predetermined power threshold.

14. The electronic device (600) of any of claims 8 to 13, wherein the at least one processor is further configured to cause the electronic device (600) to:
upon supplying power to the propeller (302) at the predetermined power threshold, prevent a reverse angle condition (418) of the propeller (302).

15. A non-transitory computer-readable medium comprising program code, that when executed by at least one processor of an electronic device (600), causes the electronic device (600) to carry out the method of any of claims 1 to 7.
